# EUROPEAN PATENT APPLICATION

(11) **EP 4 060 387 A1**
(43) Date of publication of application: **21.09.2022**
(21) Application number: 20908740.2
(22) Date of filing: 09.12.2020
(51) Int. Cl.: G02B 6/00

(54) **BACKLIGHT APPARATUS, DISPLAY APPARATUS, AND ELECTRONIC DEVICE**

(30) Priority: 30.12.2019 CN 201911393470
(71) Applicant: Huawei Technologies Co., Ltd., Longgang Shenzhen, Guangdong 518129 (CN)
(72) Inventor: WANG, Zhize, Shenzhen, Guangdong 518129 (CN); WANG, Peng, Shenzhen, Guangdong 518129 (CN); LI, Ruiliang, Shenzhen, Guangdong 518129 (CN); SU, Binbin, Shenzhen, Guangdong 518129 (CN); MA, Lei, Shenzhen, Guangdong 518129 (CN)
(74) Representative: Isarpatent
(86) International application number: PCT/CN2020/134793
(87) International publication number: WO 2021/135868

(57) **Abstract**

This application provides a backlight apparatus, a display apparatus, and an electronic device. A convex region including one or more protrusions is disposed on a rear side of a hole that is of the backlight apparatus and that is away from an in-light face. The convex region may locally concentrate light reflected from a side face of a light guide plate, to improve light utilization. In this way, a lighting effect and brightness in a region near the hole are improved, so that light emission on the light guide plate is even.

## Description

This application claims priority to Chinese Patent Application No. 201911393470.8, filed with the Chinese Patent Office on December 30, 2019 and entitled "BACKLIGHT APPARATUS, DISPLAY APPARATUS, AND ELECTRONIC DEVICE", which is incorporated herein by reference in its entirety.

### TECHNICAL FIELD

This application relates to the optics field, and more specifically, to a backlight apparatus, a display apparatus, and an electronic device.

### BACKGROUND

Currently, a mobile phone with a large screen-to-body ratio is widely used. Holes need to be disposed on a display screen of the mobile phone to accommodate components such as a camera, a receiver, and an ambient light. In this case, a lighting effect near a hole region of the display screen is poor, thereby forming a dark region.

On this basis, an apparatus needs to be provided to improve brightness near the hole region.

### SUMMARY

This application provides a backlight apparatus, a display apparatus, and an electronic device. A convex region or a reflection layer is disposed on a rear side of a hole that is of the backlight apparatus and that is away from an in-light face. The convex region or the reflection layer may locally concentrate light reflected from a side face of a light guide plate, to improve light utilization. In this way, a lighting effect and brightness in a region near a hole are improved, so that light emission on the light guide plate is even.

According to a first aspect, a backlight apparatus is provided. The backlight apparatus includes a light guide plate and a light source component that provides a light source for the light guide plate.

The light guide plate includes a first side face and a second side face that are disposed opposite to each other. The light source component is disposed close to the first side face.

A first hole is disposed on the light guide plate. The second side face includes a convex region. The convex region includes one or more protrusions. The convex region is located on a rear side that is of the first hole and that is away from the first side face.

For example, the first side face may be a side face of the light guide plate in a length direction, or may be a side face of the light guide plate in a width direction.

For example, the convex region on the rear side of the first hole and the first hole may meet the following condition: A projection of the first hole on a second plane (for example, an xz plane) parallel to an in-light face at least partially overlaps a projection of the convex region on the second plane. The at least partially overlapping indicates that the two projections may completely overlap, or may indicate that the two projections partially overlap. That the two projections partially overlap may indicate that one projection includes the other projection, or may indicate that one projection does not include the other projection but an intersection set exists between the two projections.

For the backlight apparatus provided in this application, light from a third side face and a fourth side face of the light guide plate can be effectively used by using the convex region disposed on the second side face on the rear side of the first hole. The third side face and the fourth side face are disposed between the first side face and the second side face, and are connected to the first side face and the second side face. When the light from the third side face and the fourth side face of the light guide plate is reflected to the convex region, the light can be reflected a plurality of times on the rear side of the first hole by using the convex region. The light on the rear side of the first hole is concentrated, to increase the light on the rear side of the first hole. This is equivalent to improving light utilization. In this way, a lighting effect on the rear side of the first hole can be improved, and brightness on the rear side of the first hole can be improved, so that light emission on the light guide plate is even.

Optionally, the first hole is disposed away from the first side face.

For example, a geometric center of the first hole is used as a reference point. In this case, disposing the first hole away from the first side face of the light guide plate may be disposed as follows: A distance between the geometric center of the first hole and the first side face in a first direction (for example, a y direction) is greater than a distance between the geometric center of the first hole and the second side face in the first direction, or a distance between the geometric center of the first hole and the second side face in a first direction is less than a distance between the geometric center of the first hole and the first side face. The first direction is a direction perpendicular to the first side face or the second side face.

For the backlight apparatus provided in this application, the first hole is disposed at a position away from the first side face, to reduce a distance between the first hole and the convex region. For a region that is on the rear side of the first hole and that is close to the first hole (it is relatively easy to form a dark region in the region), the light from the third side face or the fourth side face may be greatly concentrated in the region, to better improve a lighting effect on the rear side of the first hole and better improve brightness on the rear side of the first hole.

Optionally, the light guide plate further includes the third side face and the fourth side face that are disposed opposite to each other. Both the third side face and the fourth side face are connected to the first side face and the second side face.

The first hole is disposed close to the third side face. A distance between the third side face and a first edge that is of the convex region and that is close to the third side face is less than a shortest distance between a hole wall of the first hole and the third side face.

Alternatively, the first hole is disposed close to the fourth side face. A distance between the fourth side face and a second edge that is of the convex region and that is close to the fourth side face is less than a shortest distance between a hole wall of the first hole and the fourth side face.

The shortest distance between the hole wall of the first hole and the third side face may be understood as a distance between the third side face and an edge that is of the hole wall and that is closest to the third side face. Similarly, the shortest distance between the hole wall of the first hole and the fourth side face may be understood as a distance between the fourth side face and an edge that is of the hole wall and that is closest to the fourth side face. It may be understood that, in some implementations, the edge that is of the hole wall and that is closest to the third side face and the edge that is of the hole wall and that is closest to the fourth side face may be two ends of the hole wall in a second direction (for example, an x direction). The second direction is a direction perpendicular to the third side face or the fourth side face.

The distance between the first edge of the convex region and the third side face indicates a shortest distance between the first edge and the third side face in the second direction. The shortest distance between the hole wall of the first hole and the third side face indicates a distance between the hole wall of the first hole and the third side face in the second direction. Similarly, the distance between the second edge of the convex region and the fourth side face indicates a distance between the second edge and the fourth side face in the second direction. The shortest distance between the hole wall of the first hole and the fourth side face indicates a shortest distance between the hole wall of the first hole and the fourth side face in the second direction.

For the backlight apparatus provided in this application, when the first hole is disposed close to the third side face, the convex region is disposed closer to a third side edge, so that more light from the fourth side face can be concentrated, to further increase light on the rear side of the first hole and improve brightness on the rear side of the first hole. Alternatively, when the first hole is disposed close to the fourth side face, the convex region is disposed closer to a fourth side edge, so that more light from the third side face can be concentrated, to further increase light on the rear side of the first hole and improve brightness on the rear side of the first hole.

Optionally, a shape of the protrusion is an arc.

For the backlight apparatus provided in this application, the shape of the protrusion of the convex region is designed as the arc with a relatively smooth curve, which can effectively avoid a phenomenon of uneven brightness on the rear side of the first hole. In this way, light emission on the rear side of the first hole is even, so that light emission on the entire light guide plate is even.

Optionally, a cross section of the protrusion on a first plane includes two connected edges. An included angle β between the two edges meets the following condition: 90°<β<150°. The first plane is parallel to the light guide plate.

For example, the shape of the protrusion may be a shape with a closed angle such as a triangle or a trapezoid.

Optionally, a second hole is further disposed on the light guide plate. The convex region is also located on a rear side that is of the second hole and that is away from the first side face.

Optionally, a reflection layer is disposed on the convex region. A reflectivity of the reflection layer is greater than a preset value.

For the backlight apparatus provided in this application, the reflection layer is disposed on the convex region of the light guide plate. The reflectivity of the reflection layer is relatively good. In this way, light that may be originally transmitted outside is reflected by the reflection layer to the region near the first hole. When the light on the rear side of the first hole is increased by using the convex region, a light loss can be reduced. In this way, the light on the rear side of the first hole is further increased, to increase brightness on the rear side of the first hole.

Optionally, a shape of the first hole is a raceway shape, a circle, a rectangle, an oval, or the like.

According to a second aspect, a backlight apparatus is provided. The backlight apparatus includes a light guide plate and a light source component that provides a light source for the light guide plate.

The light guide plate includes a first side face and a second side face that are disposed opposite to each other. The light source component is disposed close to the first side face.

A first hole is disposed on the light guide plate. A reflection layer is disposed on the second side face. The reflection layer is disposed on a rear side that is of the first hole and that is away from the first side face. A reflectivity of the reflection layer is greater than a preset value.

It may be understood that the reflection layer is disposed on a region on the second side face on the rear side of the first hole.

For example, the first side face may be a side face of the light guide plate in a length direction, or may be a side face of the light guide plate in a width direction.

For example, the reflection layer disposed on the rear side of the first hole and the first hole may meet the following condition: A projection of the first hole on a second plane (for example, an xz plane) parallel to an in-light face at least partially overlaps a projection of the reflection layer on the second plane. The at least partially overlapping indicates that the two projections may completely overlap, or may indicate that the two projections partially overlap. That the two projections partially overlap may indicate that one projection includes the other projection, or may indicate that one projection does not include the other projection but an intersection set exists between the two projections.

For the backlight apparatus provided in this application, the reflection layer located on the rear side of the first hole is disposed on the second side face of the light guide plate. The reflectivity of the reflection layer is relatively good. In this way, light that may be originally transmitted outside is reflected by the reflection layer to a region near the first hole, to reduce a light loss. Light on the rear side of the first hole can be increased, to increase brightness on the rear side of the first hole, so that light emission on the light guide plate is even.

Optionally, the first hole is disposed away from the first side face.

For example, a geometric center of the first hole is used as a reference point. In this case, disposing the first hole away from the first side face of the light guide plate may be as follows: A distance between the geometric center of the first hole and the first side face in a first direction (for example, a y direction) is greater than a distance between the geometric center of the first hole and the second side face in the first direction, or a distance between the geometric center of the first hole and the second side face in a first direction is less than a distance between the geometric center of the first hole and the first side face. The first direction is a direction perpendicular to the first side face or the second side face.

For the backlight apparatus provided in this application, the first hole is disposed in a position away from the first side face, to reduce a distance between the first hole and the reflection layer. For a region that is on the rear side of the first hole and that is close to the first hole (it is relatively easy to form a dark region in the region), light that may be originally transmitted outside may be reflected by the reflection layer to this region to a relatively large extent, to greatly reduce a light loss, better increase the light on the rear side of the first hole, and better improve brightness on the rear side of the first hole, so that light emission on the light guide plate is even.

Optionally, the light guide plate further includes the third side face and the fourth side face that are disposed opposite to each other. Both the third side face and the fourth side face are connected to the first side face and the second side face.

The first hole is disposed close to the third side face. A distance between the third side face and a first edge that is of the reflection layer and that is close to the third side face is less than a shortest distance between a hole wall of the first hole and the third side face.

Alternatively, the first hole is disposed close to the fourth side face. A distance between the fourth side face and a second edge that is of the reflection layer and that is close to the fourth side face is less than a shortest distance between a hole wall of the first hole and the fourth side face.

The shortest distance between the hole wall of the first hole and the third side face may be understood as a distance between the third side face and an edge that is of the hole wall and that is closest to the third side face. Similarly, the shortest distance between the hole wall of the first hole and the fourth side face may be understood as a distance between the fourth side face and an edge that is of the hole wall and that is closest to the fourth side face. It may be understood that, in some implementations, the edge that is of the hole wall and that is closest to the third side face and the edge that is of the hole wall and that is closest to the fourth side face may be two ends of the hole wall in a second direction (for example, an x direction). The second direction is a direction perpendicular to the third side face or the fourth side face.

The distance between the first edge of the reflection layer and the third side face indicates a shortest distance between the first edge and the third side face in the second direction. The shortest distance between the hole wall of the first hole and the third side face indicates a distance between the hole wall of the first hole and the third side face in the second direction. Similarly, the distance between the second edge of the reflection layer and the fourth side face indicates a distance between the second edge and the fourth side face in the second direction. The shortest distance between the hole wall of the first hole and the fourth side face indicates a shortest distance between the hole wall of the first hole and the fourth side face in the second direction.

For the backlight apparatus provided in this application, when the first hole is disposed close to the third side face, the reflection layer disposed on the second side face is disposed closer to a third side edge, so that more light from the fourth side face can be concentrated, to further increase light on the rear side of the first hole and improve brightness on the rear side of the first hole. Alternatively, when the first hole is disposed close to the fourth side face, the reflection layer disposed on the second side face is disposed closer to a fourth side edge, so that more light from the third side face can be concentrated, to further increase light on the rear side of the first hole and improve brightness on the rear side of the first hole.

Optionally, a thickness d of the reflection layer meets the following condition: 0 millimeters < d ≤ 0.15 millimeters.

For the backlight apparatus provided in this application, the thickness of the reflection layer is limited, so that the thickness of the reflection layer is relatively small. In this way, the following case can be effectively avoided: A size of the backlight apparatus in the first direction (for example, the y direction) becomes relatively large because the reflection layer is added, to reduce a size of a display apparatus or an electronic device in which the backlight apparatus is installed.

Optionally, the reflection layer is a coating coated on the second side face.

Alternatively, the reflection layer is a reflection plate fitted to the second side face.

Optionally, the preset value is 90%.

Optionally, a second hole is further disposed on the light guide plate. The reflection layer is also disposed on the rear side that is of the second hole and that is away from the first side face.

Optionally, the second side face includes a convex region. The reflection layer is disposed on the convex region. The convex region includes one or more protrusions.

For the backlight apparatus provided in this application, the light from the third side face and the fourth side face of the light guide plate can be effectively used by using the convex region disposed on the second side face on the rear side of the first hole. The third side face and the fourth side face are disposed between the first side face and the second side face, and are connected to the first side face and the second side face. When the light from the third side face and the fourth side face of the light guide plate is reflected to the convex region, the light can be reflected a plurality of times on the rear side of the first hole by using the convex region. The light on the rear side of the first hole is concentrated, to increase the light on the rear side of the first hole. This is equivalent to improving light utilization. The light on the rear side of the first hole is increased to improve brightness on the rear side of the first hole. In addition, the reflection layer with the relatively good reflectivity is disposed on the convex region, so that the light that may be originally transmitted outside is reflected by the reflection layer to the region near the first hole. In this way, a light loss can be reduced, the light on the rear side of the first hole can be further increased, and brightness on the rear side of the first hole can be improved.

Optionally, a shape of the first hole is a raceway shape, a circle, a rectangle, an oval, or the like.

According to a third aspect, a display apparatus is provided. The display apparatus includes a display panel and the backlight apparatus in any implementation of the first aspect. The display panel is disposed on an out-light side of the backlight apparatus.

According to a fourth aspect, a display apparatus is provided. The display apparatus includes a display panel and the backlight apparatus in any implementation of the second aspect. The display panel is disposed on an out-light side of the backlight apparatus.

According to a fifth aspect, an electronic device is provided. The electronic device includes a display apparatus, at least one component, and a main body for accommodating the display apparatus. The display apparatus includes a display panel and the backlight apparatus in any implementation of the first aspect. The display panel is disposed on an out-light side of the backlight apparatus. The at least one component is accommodated in a first hole of the backlight apparatus.

A part or all of the component is accommodated in the first hole. For example, when a part of the component is accommodated in the first hole, the other part of the component may extend out of the out-light side of the backlight apparatus, or may extend out of a side that is of the backlight apparatus and that is away from the out-light side.

Optionally, the component is a camera.

According to a sixth aspect, an electronic device includes a display apparatus, at least one component, and a main body for accommodating the display apparatus. The display apparatus includes a display panel and the backlight apparatus in any implementation of the second aspect. The display panel is disposed on an out-light side of the backlight apparatus. The at least one component is accommodated in a first hole of the backlight apparatus.

A part or all of the component is accommodated in the first hole. For example, when a part of the component is accommodated in the first hole, the other part of the component may extend out of the out-light side of the backlight apparatus, or may extend out of a side that is of the backlight apparatus and that is away from the out-light side.

Optionally, the component is a camera.

### BRIEF DESCRIPTION OF DRAWINGS

FIG. 1 is a schematic structural diagram of an electronic device according to this application;
FIG. 2 is a schematic structural diagram of a display apparatus according to this application;
FIG. 3 is a schematic exploded diagram of a backlight apparatus according to this application;
FIG. 4 is a schematic structural diagram of a backlight apparatus according to this application;
FIG. 5 is another schematic structural diagram of a display apparatus according to this application;
FIG. 6(a) and FIG. 6(b) are another schematic structural diagram of a backlight apparatus according to this application;
FIG. 7 is another schematic structural diagram of a backlight apparatus according to this application;
FIG. 8 is a schematic structural diagram of a part of a backlight apparatus according to this application;
FIG. 9(a) and FIG. 9(b) are another schematic structural diagram of a backlight apparatus according to this application;
FIG. 10 is a schematic structural diagram of a shape of a convex region of a light guide plate according to this application;
FIG. 11(a) and FIG. 11(b) are another schematic structural diagram of a part of a backlight apparatus according to this application;
FIG. 12(a) and FIG. 12(b) are another schematic structural diagram of a part of a backlight apparatus according to this application;
FIG. 13 is another schematic structural diagram of a backlight apparatus according to this application;
FIG. 14(a) to FIG. 14(d) are another schematic structural diagram of a shape of a convex region of a light guide plate according to this application;
FIG. 15 is another schematic structural diagram of a part of a backlight apparatus according to this application;
FIG. 16 is another schematic structural diagram of a backlight apparatus according to this application;
FIG. 17 is another schematic structural diagram of a backlight apparatus according to this application;
FIG. 18(a) and FIG. 18(b) are another schematic structural diagram of a part of a backlight apparatus according to this application;
FIG. 19 is another schematic structural diagram of a backlight apparatus according to this application;
FIG. 20 is another schematic structural diagram of a backlight apparatus according to this application; and
FIG. 21 is still another schematic structural diagram of a backlight apparatus according to this application.

### DESCRIPTION OF EMBODIMENTS

The following describes technical solutions of this application with reference to the accompanying drawings.

A backlight apparatus in this application is configured to provide a light source for a display apparatus having a display function. The display apparatus may be installed in an electronic device such as a mobile phone, a tablet computer, or a computer display screen. The electronic device may be a device such as a mobile phone, a tablet computer, an electronic reading device, or a display.

For ease of description, a coordinate system in the accompanying drawings in this application is described.

The backlight apparatus is used as a reference object. Herein, x, y, and z directions are perpendicular to each other. The x direction may represent a width direction of the backlight apparatus, the y direction may represent a length direction of the backlight apparatus, and the z direction may represent a thickness direction of the backlight apparatus. A size of the backlight apparatus in the length direction is greater than a size in the width direction. An xy plane is approximately parallel to a plane in which the backlight apparatus is located. When the backlight apparatus is installed in the display apparatus or the electronic device, the length direction, the width direction, and the thickness direction of the backlight apparatus are consistent with a length direction, a width direction, and a thickness direction of the display apparatus or the electronic device.

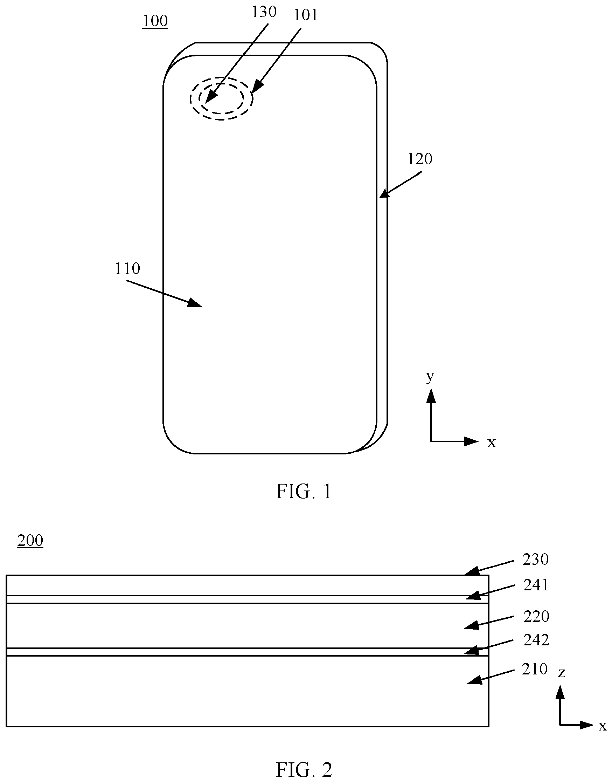

FIG. 1 is a schematic structural diagram of an electronic device according to this application. With reference to FIG. 1, the electronic device 100 includes a display screen 110, a housing 120, and a camera 130. A hole 101 is disposed on the display screen 110. Apart or all of the camera 130 is accommodated in the hole 101.

The hole 101 may be disposed in any position of the display screen 110. For example, the hole 101 may be disposed in an upper left corner of the display screen 110 shown in FIG. 1; or the hole 101 may be disposed on an upper right side of the display screen 110, a middle position of an upper end of the display screen 110, a lower end of the display screen 110, or each of four corners of the display screen 110. This is not limited in this application.

For example, when the electronic device is a mobile phone, the housing 120 may be a frame of the mobile phone.

It should be understood that the electronic device 100 shown in FIG. 1 is not limited to the foregoing components, and may further include other components, for example, a battery, a flash, a fingerprint recognition module, a receiver, a button, and an ambient light sensor. In this embodiment of this application, an electronic device in which the camera 130 is installed is used as an example for description. However, the components installed in the electronic device 100 are not limited thereto.

It should be further understood that the hole 101 of the display screen 110 can not only accommodate the camera 130, but also accommodate a component such as a receiver or an ambient light, and a plurality of cameras. In addition, when the display screen 110 needs to accommodate a plurality of components, a plurality of holes 101 may be disposed on the display screen 110 to accommodate the plurality of components. One or more components are accommodated in one hole. This is not limited in this application.

FIG. 2 is a schematic structural diagram of a display apparatus according to this application. The display apparatus may be an apparatus that has a display function and that is installed in an electronic device such as a mobile phone, a tablet computer, or a computer display screen. For example, the display screen shown in FIG. 1 may be an example of the display apparatus shown in FIG. 2. With reference to FIG. 2, the display apparatus 200 includes a backlight apparatus 210 and a display panel 220 disposed on an out-light side of the backlight apparatus 210. The backlight apparatus 210 and the display panel 220 may be connected by using an adhesive 242. The adhesive 242 may be a light shielding adhesive.

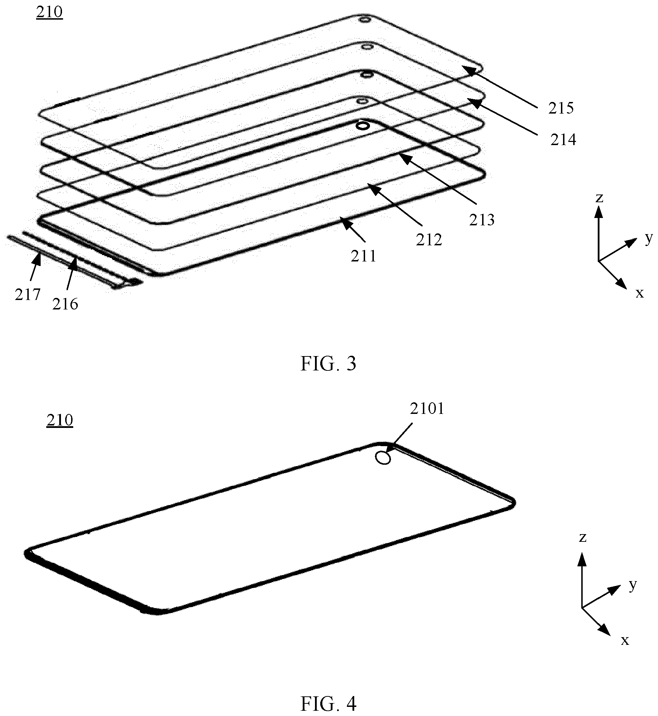

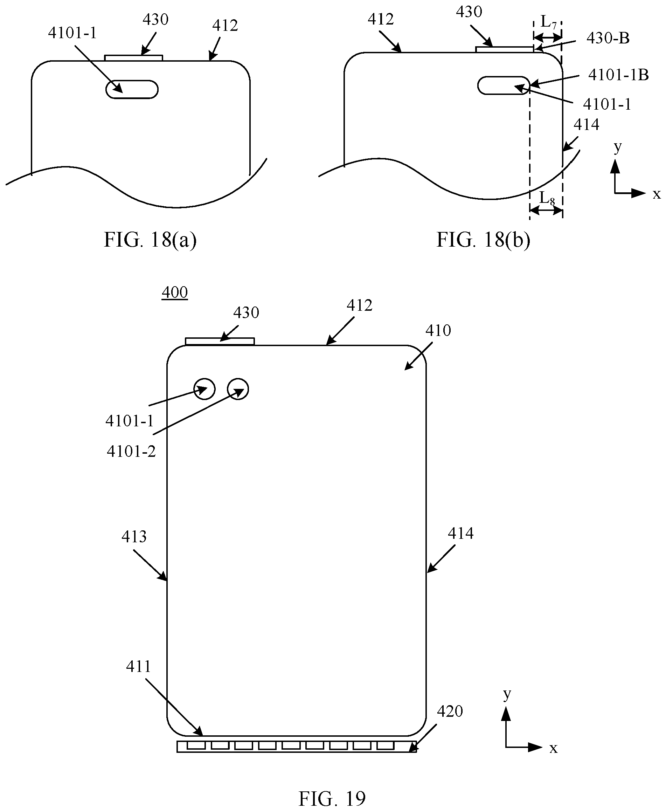

The backlight apparatus 210 is configured to: provide a light source for the display apparatus, and convert a line light source into an area light source. Light is emitted from the out-light side of the backlight apparatus 210, to cooperate with the display apparatus to complete the display function. The out-light side of the backlight apparatus 210 is a side that is of the backlight apparatus 210 and that is close to the display panel 220. The backlight apparatus 210 may be any backlight apparatus described below, and corresponds to a structure shown in each of FIG. 3 to FIG. 18(a) and FIG. 18(b). For specific description, refer to the following.

The display panel 220 may be a display panel without a touch control function, or may be a panel with a touch control function. When the display panel 220 is a display panel with the touch control function, the display apparatus 200 may also be referred to as a "touch panel". The display apparatus 200 is an inductive liquid crystal display apparatus that can receive an input signal such as a contact, and is applied to an electronic device such as a mobile phone, an electronic book, or a digital camera. For example, the display panel 220 may be a liquid crystal display panel.

Optionally, the display apparatus 200 may further include a glass cover 230 disposed on the display panel 220, and is configured to protect the display panel 220. The display panel 220 and the glass cover 230 may be connected by using an adhesive 241. The adhesive 241 may be an optical clear adhesive.

In addition, a hole (not shown in the figure) is disposed in the display apparatus of this application. For example, the hole 101 is disposed on the display screen 110 shown in FIG. 1. For example, the hole in the display apparatus may be a hole that penetrates the display panel and the backlight apparatus. Light from the backlight apparatus can penetrate the glass cover. For example, the hole in the display apparatus may alternatively be a hole that penetrates the backlight apparatus. No hole is disposed on the display panel. A region that is in the display panel and that is opposite to the hole may be set to a transparent region, to transmit the light from the backlight apparatus.

FIG. 3 is a schematic exploded diagram of a backlight apparatus according to this application. FIG. 4 is a schematic structural diagram of a backlight apparatus according to this application. The backlight apparatus herein may correspond to the backlight apparatus in FIG. 2. With reference to FIG. 3 and FIG. 4, a hole 2101 for accommodating a component is disposed on the backlight apparatus 210. The backlight apparatus 210 includes a main body 211; a reflection plate 212, a light guide plate 213, a diffusion plate 214, and a prism plate 215 that are sequentially stacked and disposed on the main body 211; and a light source component 216 and a flexible printed circuit (flexible printed circuit, FPC) 217 that are disposed on one side of the main body 211. The light source component 216 is connected to the FPC 217.

The light source component 216 is configured to provide a light source for the backlight apparatus. The light source component 216 is disposed on a side face of the light guide plate 213, and is connected to the side face of the light guide plate 213. The side face is an in-light face of light of the light guide plate 213. The in-light face indicates a face from which the light source enters. For example, the light source component 216 may include a plurality of light-emitting diodes (light-emitting diode, LED).

The main body 211 serves as a frame of the backlight apparatus, and is configured to support and protect other components of the backlight apparatus. A material of the main body 211 may be metal such as iron or aluminum, and the main body 211 may be separately referred to as an iron frame or an aluminum frame.

The reflection plate 212 is used to improve utilization of the light source. The reflection plate 212 is a structure including a plurality of layers of films. Each layer of film has a relatively high reflectivity. Light is cast on a surface of the reflection plate 212. The light may be reflected by each layer of film, to implement the high reflectivity of the reflection plate.

The light guide plate 213 is configured to convert a line light source from the light source component 216 into an area light source, to implement an even light function. The light guide plate 213 is configured to coat the light source on an out-light face of the light guide plate 213. The out-light face indicates a face from which the light source transmits light out. Specifically, for the light guide plate 213, a saw-tooth structure of the in-light face may be used to enable incident light to enter the light guide plate from the in-light face of the light guide plate as evenly as possible. The entered light is reflected to the out-light face of the light guide plate by using a dot on a lower face of the light guide plate.

The diffusion plate 214 is configured to diffuse the light coming out of the light guide plate 213, to implement the even light function. In this way, a Newton's ring caused due to optical interference can be further avoided. Specifically, for the diffusion plate 214, a film material surface is doped with small particles, or irregular concave and convex particle shapes are engraved on a surface, to implement a light diffusion function. This is similar to a principle of diffuse reflection.

The prism plate 215 is used to improve light utilization. A prism structure is disposed on the film material surface, to implement a light concentration function.

It should be understood that structures of the backlight apparatuses shown in FIG. 3 and FIG. 4 are merely example descriptions, and should not constitute any limitation on this application. In this application, the light guide plate and the light source component are main components constituting the backlight apparatus. When the backlight apparatus includes the light guide plate and the light source component, other components may be randomly combined. The other components may be the components in FIG. 3, or may be components that are not shown in FIG. 3. This is not limited in this application.

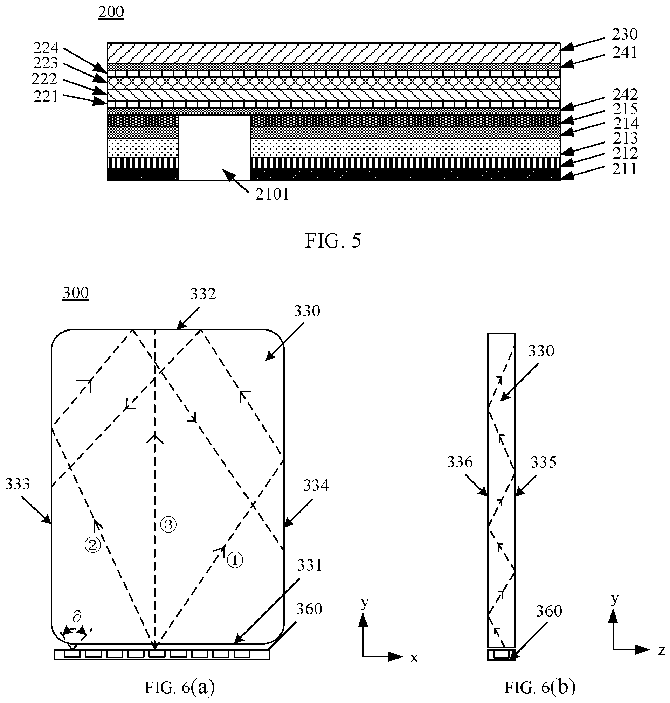

With reference to the display apparatus in FIG. 2 and the backlight apparatuses in FIG. 3 and FIG. 4, FIG. 5 is a schematic sectional view of the display apparatus in FIG. 2. With reference to FIG. 5, the display apparatus 200 includes a backlight apparatus 210 and a display panel 220 that are sequentially stacked and disposed. The backlight apparatus 210 is connected to the display panel 220 by using an adhesive 242. Optionally, the display apparatus 200 further includes a glass cover 230 disposed on one side of the display panel 220, and the display panel 220 is connected to the glass cover 230 by using the adhesive 241.

The backlight apparatus 210 includes a main body 211, a reflection plate 212, a light guide plate 213, a diffusion plate 214, and a prism plate 215 that are sequentially stacked and disposed; and a hole 2101 disposed in the backlight apparatus 210. The display panel 220 includes a lower polarizer 221, thin film transistor (thin film transistor, TFT) glass 222, color film (color film, CF) glass 223, and an upper polarizer 224 that are sequentially stacked and disposed.

For the light guide plate, as described above, the light guide plate has an in-light face and an out-light face in terms of functions. For ease of description, in this application, faces of the light guide plate are further defined in a structure. The faces are respectively a front face and a back face that are disposed opposite to each other, and four side faces that are connected to both the front face and the back face. The front face of the light guide plate may be understood as the out-light face of the light guide plate. When a user uses the electronic device and a screen faces the user, the front face of the light guide plate also faces the user, and correspondingly, the back face of the light guide plate is back to the user. The four side faces of the light guide plate are sequentially connected. Two side faces are disposed opposite to each other, and the other two sides are also disposed opposite to each other. The in-light face of the light guide plate may be any side face. For ease of differentiation, a side face that serves as the in-light face is denoted as a first side face, a side face that is disposed opposite to the first side face is denoted as a second side face, and the remaining two side faces that are disposed between the first side face and the second side face are respectively denoted as a third side face and a fourth side face.

In addition, a first plane, a second plane, a first direction, and a second direction are further defined in this application. The first plane is a plane parallel to the light guide plate. Specifically, the first plane is a plane parallel to the front face or the back face of the light guide plate. The second plane is a plane parallel to the in-light face of the light guide plate. The first direction is a direction perpendicular to the in-light face. The second direction is a direction parallel to the in-light face and perpendicular to the first direction, or the second direction is a direction perpendicular to the third side face or the fourth side face.

For example, if the in-light face is a side face of the light guide plate in a width direction (an x direction), the second plane is an xz plane, the first direction is a y direction, and the second direction is the x direction.

For another example, if the in-light face is a side face of the light guide plate in a length direction (a y direction), the second plane is a yz plane, the first direction is an x direction, and the second direction is the y direction.

For ease of understanding, with reference to FIG. 6(a) and FIG. 6(b), an optical path passing through the light guide plate is described in detail.

With reference to FIG. 6(a) and FIG. 6(b), a backlight apparatus 300 includes a light guide plate 330 and a light source component 360. The light guide plate 330 includes a first side face 331, a second side face 332, a third side face 333, a fourth side face 334, and a front face 335 and a back face 336 that are connected to the four side faces. The first side face 331 and the second side face 332 are disposed opposite to each other, and are side faces of the light guide plate 330 in a width direction (an x direction). The third side face 333 and the fourth side face 334 are disposed opposite to each other, and are side faces of the light guide plate 330 in a length direction (a y direction). The front face 335 and the back face 336 are also disposed opposite to each other. The light source component 360 is disposed on the first side face 331 of the light guide plate 330. The first side face 331 is an in-light face of the light guide plate 330. The light source component 360 includes a plurality of light sources that emit light to the first side face 331. The light source emits light at a light emitting angle ∂. For example, the light emitting angle ∂ of the light source may be 120 degrees.

In a z direction, light is reflected a plurality of times by the front face 335 and the back face 336, and is emitted from the front face 335.

In the y direction, light is transmitted from the first side face 331 that is of the light guide plate 330 and on which the light source component 360 is disposed, to the second side face 332 that is disposed opposite to the first side face 331; and is reflected by the second side face 332 in a direction close to the first side face 331. In directions shown in FIG. 6(a) and FIG. 6(b), it may be understood that the light is transmitted from bottom to top and from top to bottom. In a process in which the light is transmitted from bottom to top in the y direction, the light mainly includes two types of light. A first type of light is reflected by the third side face 333 or the fourth side face 334 and is transmitted to the second side face 332, for example, a light ray ① and a light ray ②. A second type of light can be transmitted to the second side face 332 without being reflected by the side face, for example, a light ray ③.

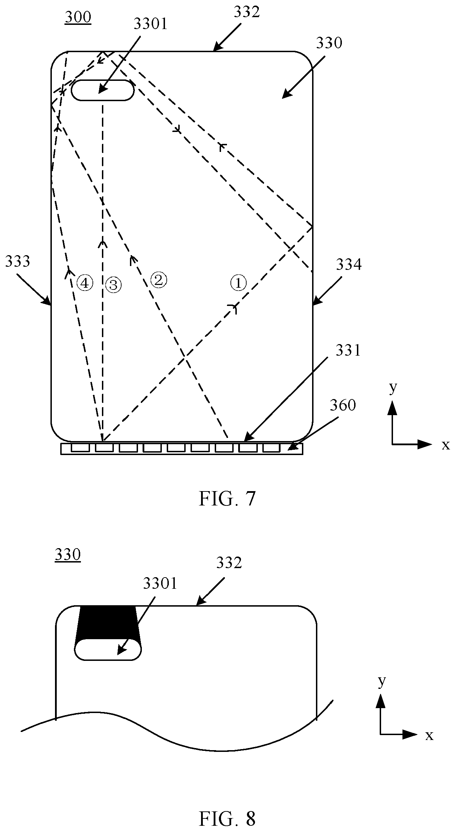

With reference to FIG. 7 and FIG. 8, a hole 3301 is disposed on the light guide plate 330. A part of light is cut off by the hole 3301. This part of light cannot be transmitted to a rear side of the hole 3301. Therefore, a lighting effect on the rear side of the hole 3301 is relatively poor, and a dark region of a shadow part shown in FIG. 8 is formed on the rear side of the hole 3301. This part of light is mainly the second type of light, and a small part of light is the second type of light. A light ray ①, a light ray ②, a light ray ③, and a light ray ④ are used as examples. The light ray ③ is cut off by the hole 3301, and cannot be transmitted to the rear side of the hole 3301. The light ray ①, the light ray ②, and the light ray ④ can be reflected by the side face and be transmitted to the second side face 332. It should be understood that a small part of light reflected by the side face is also cut off by the hole 3301. This is not shown in the figure.

It should be understood that the rear side of the hole in this application represents a region on a side that is of the hole and that is away from the in-light face, and correspondingly, a front side of the hole represents a region on a side that is of the hole and that is close to the in-light face of the light guide plate. In other words, the rear side of the hole may represent a region on a side that is of the hole and that is away from the light source component, and the front side may represent a region on a side that is of the hole and that is close to the light source component. It should be further understood that the front side and the back side of the hole represent the front side and the back side of the hole in the first direction (for example, the y direction). For example, a geometric center line of the hole in the second direction (for example, the x direction) may be used as a boundary between the front side and the rear side of the hole.

To resolve a prior art problem of relatively poor brightness of a region near the hole in the light guide plate due to disposing of the hole, this application provides a backlight apparatus to locally concentrate light by using the side faces of the light guide plate, to improve light utilization and improve a lighting effect and brightness in the region near the hole, so that light emission on the light guide plate is even.

In this application, the backlight apparatus is mainly improved by using designs in two aspects. A first design is to improve a structure of the light guide plate. The second side face that is of the light guide plate and that is located on the rear side of the hole is set to a side face including a convex region, so that light reflected by the two side faces connected to the second side face can be reflected a plurality of times in the convex region, to improve light utilization in the region on the rear side of the hole and improve brightness on the rear side of the hole. A second design is to add a reflection layer to improve a reflectivity of light reflected to the second side face. In this way, a light loss is reduced, light utilization is improved, and brightness on the rear side of the hole is improved.

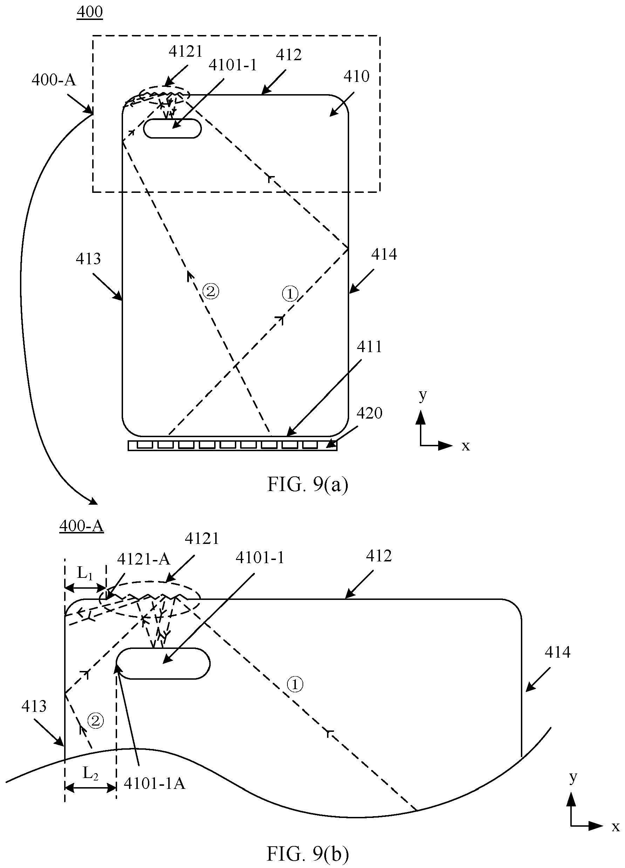

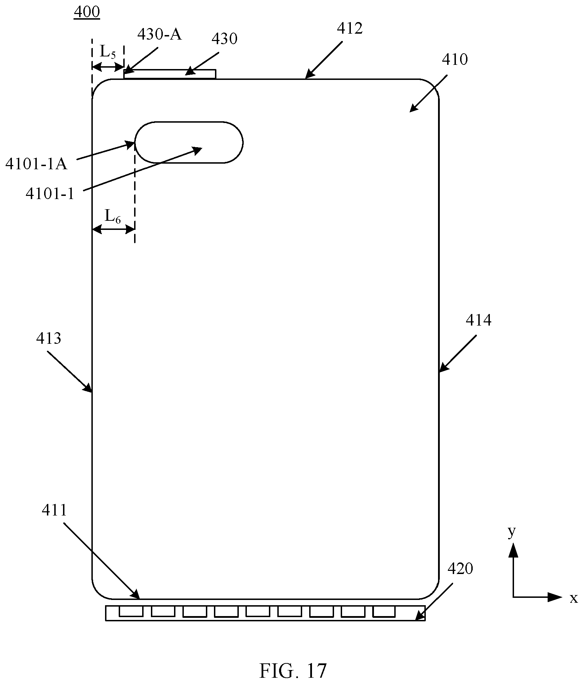

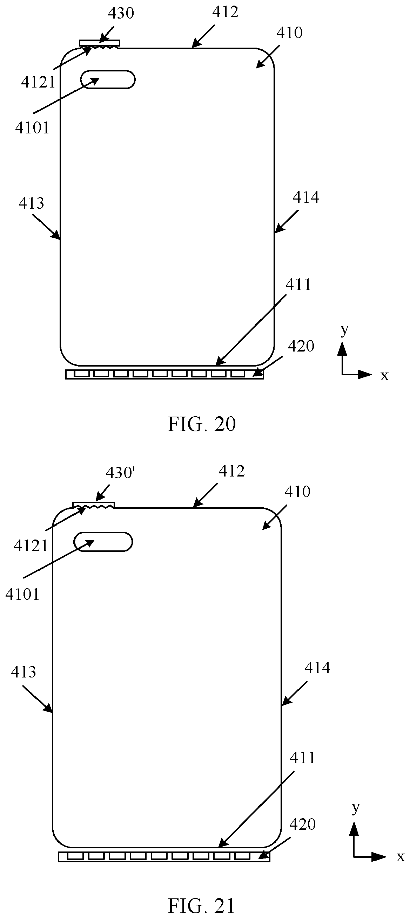

With reference to FIG. 9(a) and FIG. 9(b) to FIG. 21, the backlight apparatus in this application is described in detail below by using an example in which the backlight apparatus includes the light guide plate and the light source component. Structures shown in FIG. 9(a) and FIG. 9(b) to FIG. 16 correspond to the first design, structures shown in FIG. 17 to FIG. 19 correspond to the second design, and structures shown in FIG. 20 and FIG. 21 correspond to a combination of the first design and the second design. It should be understood that the backlight apparatus may further include, for example, the components shown in FIG. 3 and another component not shown in FIG. 3.

The following describes the backlight apparatus in different cases.

### First design

With reference to FIG. 9(a) and FIG. 9(b), a backlight apparatus 400 includes a light guide plate 410 and a light source component 420. The light guide plate 410 includes a first side face 411, a second side face 412, a third side face 413, a fourth side face 414, and a front face and a back face (not shown in the figure) that are connected to the four side faces. The first side face 411 and the second side face 412 are disposed opposite to each other, and are side faces of the light guide plate 410 in a width direction (an x direction). The third side face 413 and the fourth side face 414 are disposed opposite to each other, and are side faces of the light guide plate 410 in a length direction (a y direction). The front face and the back face are also disposed opposite to each other. It may be understood that in the structure shown in FIG. 9(a) and FIG. 9(b), the third side face may be a right side face, and the fourth side face may be a left side face. This is not limited in this application. However, for ease of description, the backlight apparatus in this application is described by using an example in which the left side face is the third side face and the right side face is the fourth side face.

The light source component 420 is disposed on the first side face 411 of the light guide plate 410. The first side face 411 is an in-light face of the light guide plate 400. A first hole 4101-1 is disposed on the light guide plate 410. The second side face 412 of the light guide plate 410 includes a convex region 4121. The convex region 4121 is located on a rear side that is of the first hole 4101-1 and that is away from the in-light face. In comparison with another region of the second side face, the convex region 4121 protrudes in a direction away from the first hole 4101-1, to form a convex curved face.

For example, the convex region 4121 on the rear side of the first hole 4101-1 and the first hole 4101-1 may meet the following condition: A projection of the first hole 4101-1 on a second plane (for example, an xz plane) parallel to the in-light face at least partially overlaps a projection of the convex region on the second plane. The at least partially overlapping indicates that the two projections may completely overlap, or may indicate that the two projections partially overlap. That the two projections partially overlap may indicate that one projection includes the other projection, or may indicate that one projection does not include the other projection but an intersection set exists between the two projections.

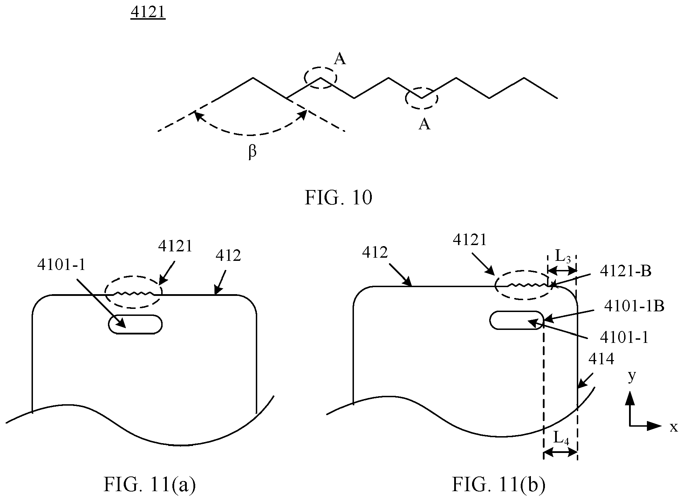

With reference to FIG. 9(a) and FIG. 9(b) and FIG. 10, the convex region 4121 includes one or more protrusions. A shape of the protrusion may be a triangle. A cross section of the protrusion on a first plane (that is, an xy plane) parallel to the light guide plate includes two connected edges. There is an included angle β between the two edges. For example, the included angle β may meet the following condition: 90°<β<150°. It should be understood that the shape of the protrusion may alternatively be another shape. This is described in detail below.

For ease of analysis and comparison, a light ray ① and a light ray ② that correspond to the same angles in FIG. 7 are used as examples to describe an optical path of the light passing the light guide plate 400. Still with reference to FIG. 9(a) and FIG. 9(b), the light ray ① is emitted from the first side face 411, reflected by the fourth side face 414 to the convex region 4121 of the second side face 412, and transmitted to the rear side of the first hole 4101-1 after being reflected by the protrusion of the convex region 4121. The light ray ① is reflected by a hole wall of the first hole 4101-1, then transmitted to the protrusion of the convex region 4121, and reflected to the third side face 413. In FIG. 7, for the light ray ① at the same angle, the light ray ① is reflected by the fourth side face to the second side face, and then directly reflected to the third side face. In this case, the light ray ① will not be transmitted to the rear side of the hole. It may be understood that the light ray ① is reflected to the rear side of the first hole 4101-1 to increase light on the rear side of the first hole 4101-1. In this way, light utilization on the rear side of the first hole 4101-1 is improved, and brightness on the rear side of the first hole 4101-1 is improved. Similarly, the light ray ② is emitted from the first side face 411, reflected by the third side face 413 to the convex region 4121 of the second side face 412, and transmitted to the rear side of the first hole 4101-1 after being reflected by the protrusion of the convex region 4121. The light ray ② is reflected by a hole wall of the first hole 4101-1, then transmitted to the protrusion of the convex region 4121, and reflected to the third side face 413. In FIG. 7, for the light ray ② at the same angle, the light ray ② is reflected by the third side face to the second side face, and then directly reflected to the fourth side face. In this case, the light ray ② will not be transmitted to the rear side of the hole. It may be understood that the light ray ② is reflected to the rear side of the first hole 4101-1 to increase the light on the rear side of the first hole 4101-1. In this way, light utilization on the rear side of the first hole 4101-1 is improved, and brightness on the rear side of the first hole 4101-1 is improved.

It should be understood that only the optical path of the light ray ① and the optical path of the light ray ② are used as examples in FIG. 9(a) and FIG. 9(b). Some other light rays from the third side face and the fourth side face also have similar light paths according to a light reflection principle. It should be further understood that although the light ray ① and the light ray ② in the examples of FIG. 9(a) and FIG. 9(b) are reflected by the hole wall only once, light rays of a light source from different angles can also be reflected by the hole wall a plurality of times.

Based on the above analysis, it can be learned that light rays from the third side face and the fourth side face of the light guide plate are effectively utilized by using the convex region in this application. When the light rays are reflected by the third side face and the fourth side face of the light guide plate to the convex region, the light rays may be reflected a plurality of times on the rear side of the hole by using the convex region. Light is concentrated on the rear side of the hole, to increase light on the rear side of the hole. This is equivalent to improving light utilization. In this way, a lighting effect on the rear side of the hole can be improved, and brightness on the rear side of the hole can be improved.

It should be understood that the structure of the backlight apparatus shown in FIG. 9(a) and FIG. 9(b) is merely an example description. The backlight apparatus may have a plurality of variant structures. For example, a variant structure of the backlight apparatus is described from the following six points.
1. A position of the hole in the light guide plate can be properly designed based on a design requirement.

Still with reference to FIG. 9(a) and FIG. 9(b), optionally, the first hole 4101-1 is disposed away from the first side face 411.

In this way, the first hole is disposed at a position away from the first side face, to reduce a distance between the first hole and the convex region. For a region that is on the rear side of the first hole and that is close to the first hole (it is relatively easy to form a dark region in the region), the light from the third side face or the fourth side face may be greatly concentrated in the region, to better improve a lighting effect on the rear side of the first hole and better improve brightness on the rear side of the first hole.

For example, the first hole 4101-1 may be disposed in an upper left corner of the light guide plate 410 shown in FIG. 9(a) and FIG. 9(b), that is, the first hole 4101-1 is disposed in a position that is of the light guide plate 410 and that is close to the third side face 413.

In this structure, optionally, still with reference to FIG. 9(a) and FIG. 9(b), a distance L₁ between the third side face 413 and a first edge 4121-A that is of the convex region 4121 and that is close to the third side face 413 is less than a shortest distance L₂ between the third side face 413 and the hole wall of the first hole 4101-1. The shortest distance between the third side face 413 and the hole wall of the first hole 4101-1 may be understood as a distance between the third side face 413 and an edge 4101-1A that is of the hole wall and that is closest to the third side face 413. In FIG. 9(a) and FIG. 9(b), the edge that is of the hole wall and that is closest to the third side face 413 is a left edge of the hole wall. It should be understood that the distance between the first edge 4121 -A of the convex region 4121 and the third side face 413 indicates a distance between the first edge 4121-A and the third side face 413 in a second direction (for example, an x direction). The shortest distance between the hole wall of the first hole 4101-1 and the third side face 413 indicates a shortest distance between the hole wall of the first hole 4101-1 and the third side face 413 in the second direction (for example, the x direction).

In this structure, when the hole is close to the third side face, the convex region is disposed closer to a third side edge, so that more light from the fourth side face can be concentrated, to further increase light on the rear side of the hole and improve brightness on the rear side of the hole.

It should be understood that, a relationship between the distance between the first edge of the convex region shown in FIG. 9(a) and FIG. 9(b) and the third side face, and the shortest distance between the hole wall of the first hole and the third side face is merely an example description, and should not constitute any limitation on this application, provided that the convex region is disposed on the rear side of the first hole. In some embodiments, the distance between the first edge of the convex region and the third side face may alternatively be greater than or equal to the shortest distance between the hole wall of the first hole and the third side face, to increase the light on the rear side of the first hole.

For example, with reference to FIG. 11(a), the first hole 4101-1 may be disposed in a middle position on an upper part of the light guide plate 410.

For example, with reference to FIG. 11(b), the first hole 4101-1 may alternatively be disposed in an upper right corner of the light guide plate 410, that is, the first hole 4101-1 is disposed in a position that is of the light guide plate 410 and that is close to the fourth side face 414.

In this structure, optionally, a distance L₃ between the fourth side face 414 and a second edge 4121-B that is of the convex region 4121 and that is close to the fourth side face 414 is less than a shortest distance L₄ between the fourth side face 414 and the hole wall of the first hole 4101-1. The shortest distance between the third side face 413 and the hole wall of the first hole 4101-1 may be understood as a distance between the fourth side face 414 and an edge 4101-1B that is of the hole wall and that is closest to the fourth side face 414. In FIG. 11(b), the edge that is of the hole wall and that is closest to the fourth side face 414 is a right edge of the hole wall. It should be understood that the distance between the second edge 4121-B of the convex region 4121 and the fourth side face 414 indicates a distance between the edge 4121-B and the fourth side face 414 in the second direction (for example, the x direction). The shortest distance between the hole wall of the first hole 4101-1 and the fourth side face 414 indicates a shortest distance between the hole wall of the first hole 4101-1 and the fourth side face 414 in the second direction (for example, the x direction).

It should be understood that, a relationship between the distance between the second edge of the convex region shown in FIG. 11(b) and the fourth side face, and the shortest distance between the hole wall of the first hole and the fourth side face is merely an example description, and should not constitute any limitation on this application, provided that the convex region is disposed on the rear side of the first hole. In some embodiments, the distance between the second edge of the convex region and the fourth side face may alternatively be greater than or equal to the shortest distance between the hole wall of the first hole and the fourth side face, to increase the light on the rear side of the first hole.

2. The hole of the light guide plate may be a hole in any shape.

For example, the first hole may be a circle, a rectangle, an oval, or a runway shape shown in FIG. 9(a) and FIG. 9(b).

3. A quantity of holes in the light guide plate may be properly designed based on a quantity of components that need to be accommodated.

It may be understood that the plurality of holes including the first hole may be disposed in the light guide plate.

For example, when the quantity of components that need to be accommodated is relatively large, a relatively large quantity of holes may be disposed. Correspondingly, when the quantity of components that need to be accommodated is relatively small, a relatively small quantity of holes may be disposed. It should be understood that when a plurality of holes are disposed in the light guide plate, shapes of the plurality of holes may be the same or different and may be randomly combined. Positions of the holes are also not limited.

It should be noted that when the plurality of holes are disposed in the light guide plate, there may be one or more convex regions disposed in the light guide plate. If one convex region is disposed, the convex region may be disposed on rear sides of the plurality of holes to compensate for light on the rear sides of the plurality of holes, or the convex region may be disposed on rear sides of some of the plurality of holes to compensate for light on the rear sides of the some holes. If a plurality of convex regions are disposed, the plurality of convex regions may be used to compensate for light of some or all of the plurality of holes; and one convex region may be used to compensate for light on a rear side of one hole, or may be used to compensate for light on rear sides of several consecutive (for example, two or three) holes.

It should be further noted that, when the plurality of holes are disposed in the light guide plate, a distance between two holes is the larger the better to avoid mutual impacts between optical paths of the two holes. However, in an actual design, the distance between the two holes may be properly designed in terms of beauty and other perspectives.

When the plurality of holes are disposed on the light guide plate, machining tolerance of each film material (for example, a prism plate, a diffusion plate, or a reflection plate) in the backlight apparatus is increased. Therefore, a related design margin may be increased in the backlight apparatus. For example, a gap between a film material and a main body is increased, and/or an overlapping region of a light shielding adhesive is increased. When the plurality of holes are designed in the light guide plate, a design size from a light emitting region of the backlight apparatus to the main body can be increased to avoid possible deformation of the film material.

4. The shape of the hole and the quantity of holes in the light guide plate can be comprehensively considered.

In a first possible implementation, when two or more components need to be accommodated, the shape of the hole may be designed as a shape (for example, a raceway-shaped hole) with relatively large accommodation space, so that one hole can accommodate two or more components. On this basis, the quantity of holes is increased.

For the same quantity of components that need to be accommodated, a relatively small quantity of holes may be disposed on the light guide plate with this structure, so that a relatively small quantity of holes are correspondingly disposed on other film materials in the backlight apparatus. In this way, assembling and aligning difficulty can be reduced, to avoid a possible assembling error and implement better cooperation compatibility with the entire apparatus.

In a second possible implementation, when two or more components need to be accommodated, a plurality of holes may be disposed, so that one hole accommodates one component or a small quantity of components.

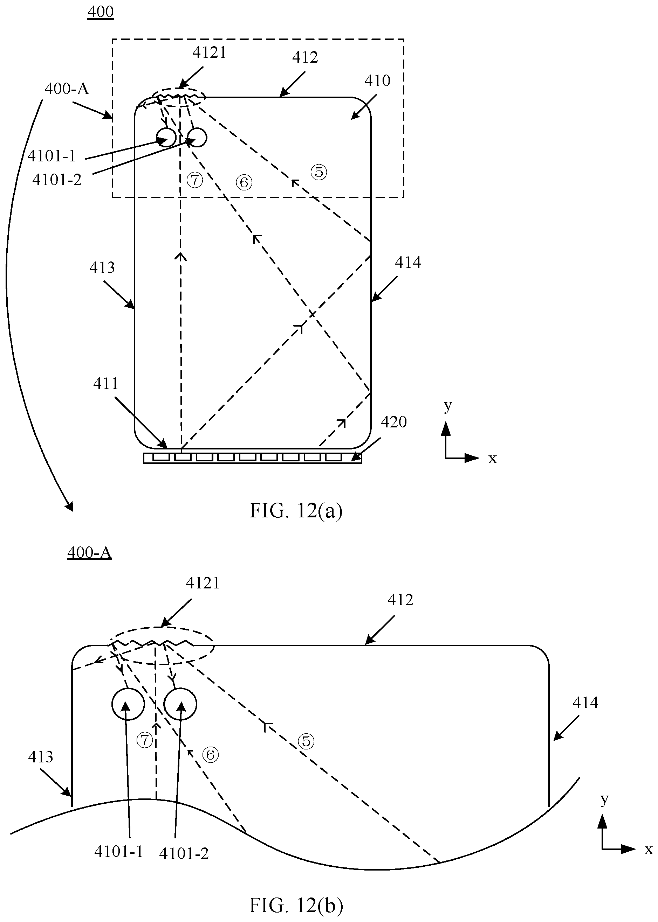

With reference to FIG. 12(a) and FIG. 12(b), two holes are disposed in the light guide plate 410. The two holes are denoted as a first hole 4101-1 and a second hole 4101-2. The two holes are both circular. One hole can accommodate one component. The second side face 412 of the light guide plate 410 includes the convex region 4121. The convex region 4121 is located on rear sides of the two holes. Light paths of light rays in the structure are described by using a light ray ⑤, a light ray ⑥, and a light ray ⑦ as examples.

The light ray ⑤ is reflected by the fourth side face 414 to the convex region 4121 of the second side face 412, reflected by the protrusion of the convex region 4121, and then transmitted to the rear side of the second hole 4101-2 on a right side, to increase light on the rear side of the second hole 4101-2. The light ray ⑥ is reflected by the fourth side face 414 to the convex region 4121 of the second side face 412 through the middle of the two holes, reflected by the protrusion of the convex region 4121, and then transmitted to the rear side of the first hole 4101-1 on a left side. It can be learned that the light ray ⑥ may pass through the middle of the two holes aslant to the convex region 4121 to increase the light on the rear side of the first hole 4101 -1, and the light ray ⑥ transmitted to the convex region 4121 is then reflected to the rear side of the first hole 4101 -1 to further increase the light on the rear side of the first hole 4101-1. The light ray ⑦ is emitted from the first side face 411, and directly transmitted to the rear sides of the two holes through the middle of the two holes without passing through the third side face 413 and the fourth side face 414, to increase the light on the rear sides of the holes.

It can be learned from the foregoing analysis that, in comparison with the implementation of disposing a plurality of holes that can accommodate two or more components, the light on the rear sides of the holes can be more effectively increased when a plurality of holes that can accommodate one component or a relatively small quantity of components, to improve a lighting effect and brightness on the rear sides of the holes. In addition, the following case is avoided: Extra space is removed from this structure. Therefore, the light guide plate has better strength. It is not easy to form a crack on the light guide plate.

It should be understood that the structure in the first possible implementation and the structure in the second possible implementation may be used in combination. This is not limited in this application. For example, if three components need to be accommodated, two holes may be disposed. One hole is used to accommodate two components, and the other hole is used to accommodate one component.

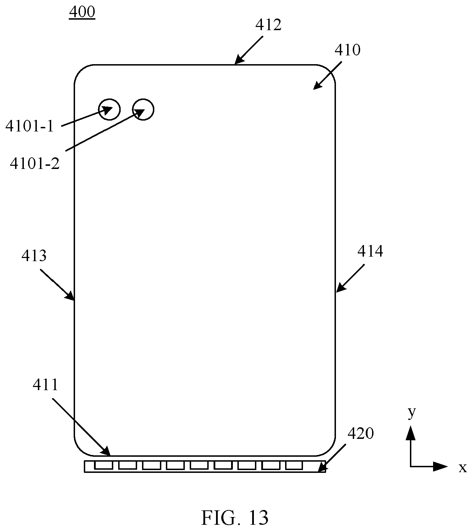

It should be noted that in the structure of the second possible implementation, the convex region may not need to be disposed in the light guide plate, and only the plurality of holes are disposed in the light guide plate. In a structure shown in FIG. 13, because a light ray can pass through a region between two adjacent holes, the light on the rear sides of the holes can also be increased.

5. The convex region of the light guide plate may have a plurality of structures. The convex region includes one or more protrusions. The triangular protrusion shown in FIG. 9(a) and FIG. 9(b) is merely an example description.

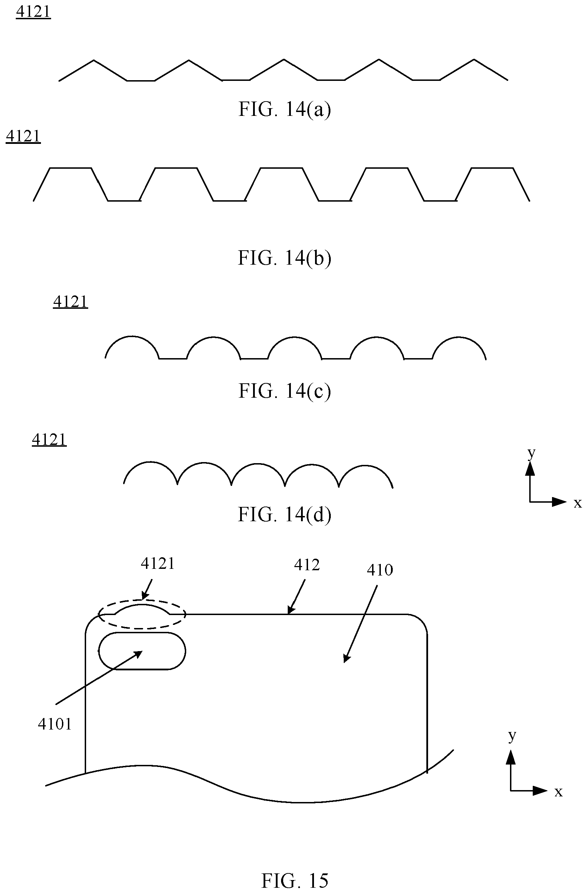

For example, with reference to FIG. 14(b), FIG. 14(c), and FIG. 14(d), shapes of the protrusions may alternatively be various shapes such as a trapezoid or an arc. With reference to FIG. 9(a) and FIG. 9(b) and FIG. 14(d), the protrusions may be directly connected. With reference to FIG. 14(a), FIG. 14(b), and FIG. 14(c), the protrusions may be connected by using relatively smooth faces.

It should be noted that when the shape of the protrusion is a structure formed by a plurality of faces, for example, a trapezoid. For example, an included angle between two adjacent edges in a cross section of the protrusion in the first plane (that is, the xy plane) may be an included angle greater than 90° and less than 150°. This is not limited in this application.

FIG. 10 is used as an example. A closed angle similar to a structure A may exist in the convex region. The closed angle is not in an even reflection face. When light is transmitted to the closed angle, brightness near the closed angle is higher than that in another region, which can easily cause a phenomenon of uneven brightness on the rear side of the hole. Generally, it is easy to form the closed angle in consideration of the shape of the protrusion and a relatively large quantity of protrusions. For example, if the shape of the protrusion is a shape such as a triangle or a trapezoid, the protrusions with these shapes originally have closed angles. For another example, when there are a relatively large quantity of protrusions, it is easy to form the closed angle at a connection position between two protrusions.

Therefore, when the convex region is designed, the shape of the protrusion and the quantity of protrusions may be comprehensively considered when a brightness requirement is met.

For example, if the brightness requirement is met as much as possible, the shape of the protrusion may be a shape with a relatively smooth curve. As shown in FIG. 14(c) and FIG. 14(d), the shape of the protrusion is an arc. For example, when the brightness requirement is met as much as possible, the quantity of protrusions may be set relatively small.

With reference to FIG. 15, the convex region 4121 of the light guide plate 410 includes one protrusion. A shape of the protrusion is an arc with a relatively smooth curve. The convex region with this structure can be effectively used to avoid a phenomenon of uneven brightness on a rear side of a hole. In this way, light emission on the rear side of the hole is even, so that light emission on the entire light guide plate is even.

6. The light source component may be disposed on any side face of the light guide plate.

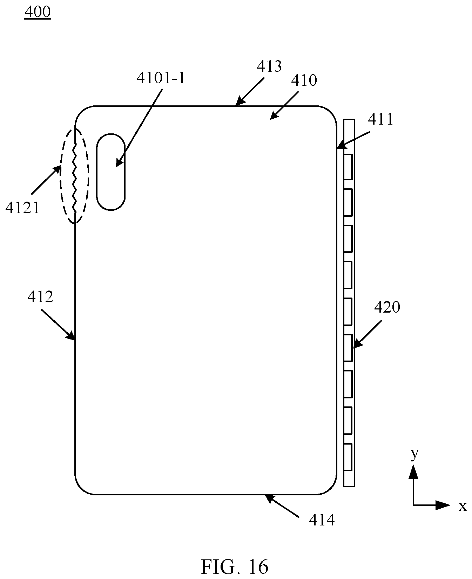

For example, with reference to FIG. 16, the light source component 420 may alternatively be disposed on a side face of the light guide plate 410 in a length direction. In this case, the side face of the light guide plate 410 in the length direction is the in-light face or the first side face 411.

### Second design

With reference to FIG. 17, a backlight apparatus 400 includes a light guide plate 410 and a light source component 420. The light guide plate 410 includes a first side face 411, a second side face 412, a third side face 413, a fourth side face 414, and a front face and a back face (not shown in the figure) that are connected to the four side faces. The first side face 411 and the second side face 412 are disposed opposite to each other, and are side faces of the light guide plate 410 in a width direction (an x direction). The third side face 413 and the fourth side face 414 are disposed opposite to each other, and are side faces of the light guide plate 410 in a length direction (a y direction). The front face and the back face are also disposed opposite to each other. The light source component 420 is disposed on the first side face 411 of the light guide plate 410. The first side face 411 is an in-light face of the light guide plate 400. A first hole 4101-1 is disposed on the light guide plate 410. A reflection layer 430 is disposed on the second side face 412 of the light guide plate 410. The reflection layer 430 is disposed on a rear side that is of the first hole 4101-1 and that is away from the in-light face. In other words, the reflection layer 430 is disposed in a region on the second side face 412 on the rear side of the first hole 4101-1. The reflection layer 430 has a relatively good reflectivity. For example, the reflectivity of the reflection layer 430 is greater than a preset value. For example, the preset value may be 90%.

Some light transmitted in the light guide plate may be transmitted outside from a side face. The reflection layer located on the rear side of the hole is disposed on the second side face of the light guide plate of the backlight apparatus in this application. The reflectivity of the reflection layer is relatively good. In this way, light that may be originally transmitted outside is reflected by the reflection layer to a region near the hole, to reduce a light loss. In this way, light on the rear side of the hole can be increased, and brightness on the rear side of the hole can be improved.

It should be noted that, because the reflection layer is disposed on the side face of the light guide plate, a space requirement of the backlight apparatus in a first direction perpendicular to the in-light face is improved to some extent. During design, avoidance space needs to be disposed for a main body for accommodating each film material of the backlight apparatus in a position corresponding to the reflection layer.

To avoid a case in which a size of the backlight apparatus in the first direction (for example, a y direction) becomes relatively large because the reflection layer is added, a thickness of the reflection layer 430 is the thinner the better in principle when brightness can be improved. For example, the thickness d of the reflection layer 430 may meet the following condition: 0 millimeters < d ≤ 0.15 millimeters.

Optionally, the reflection layer 430 may be a coating coated on the second side face 412. For example, a material of the coating may be a material such as silver or aluminum. For example, a thickness of the coating may be less than or equal to 0.01 millimeters.

Optionally, the reflection layer 430 may alternatively be a reflection plate fitted to the second side face 412. For example, a thickness of the reflection plate may be less than or equal to 0.15 millimeters.

For example, the reflection plate may be a structure including a plurality of layers of films. Each layer of film has a relatively high reflectivity. Light is cast on a surface of the reflection plate. The light may be reflected by each layer of film, to implement the final accumulated high reflectivity of the reflection plate.

In this application, for example, the reflection layer 430 disposed on the rear side of the first hole 4101-1 and the first hole 4101-1 may meet the following condition: A projection of the first hole 4101-1 on a second plane (for example, an xz plane) parallel to the in-light face at least partially overlaps a projection of the reflection layer 430 on the second plane. For an explanation of the at least partially overlapping, refer to the related description in the first design. Details are not described again.

It should be understood that the backlight apparatus shown in FIG. 17 is merely an example description. The backlight apparatus may have a plurality of variant structures.
1. A position of the hole in the light guide plate can be properly designed based on a design requirement.

Still with reference to FIG. 17, optionally, the first hole 4101 -1 is disposed away from the first side face 411.

For example, the first hole 4101-1 may be disposed in an upper left corner of the light guide plate 410 shown in FIG. 17, that is, the first hole 4101-1 is disposed in a position that is of the light guide plate 410 and that is close to the third side face 413.

In this structure, still with reference to FIG. 17, optionally, a distance L₅ between the third side face 413 and a first edge 430-A that is of the reflection layer 430 and that is close to the third side face 413 is less than a shortest distance L₆ between the third side face 413 and a hole wall of the first hole 4101-1. The shortest distance between the third side face 413 and the hole wall of the first hole 4101-1 may be understood as a distance between the third side face 413 and an edge 4101-1A that is of the hole wall and that is closest to the third side face 413. In FIG. 17, the edge that is of the hole wall and that is closest to the third side face 413 is a left edge of the hole wall. It should be understood that the distance between the first edge 430-A of the reflection layer 430 and the third side face 413 indicates a distance between the first edge 430-A and the third side face 413 in a second direction (for example, an x direction). The shortest distance between the hole wall of the first hole 4101-1 and the third side face 413 indicates a shortest distance between the hole wall of the first hole 4101-1 and the third side face 413 in the second direction (for example, the x direction).

In this structure, when the hole is close to the third side face, the reflection layer is disposed closer to a third side edge, so that more light from the fourth side face can be concentrated, to further increase light on the rear side of the hole and improve brightness on the rear side of the hole.

It should be understood that, a relationship between the distance between the first edge of the reflection layer shown in FIG. 17 and the third side face, and the shortest distance between the hole wall of the first hole and the third side face is merely an example description, and should not constitute any limitation on this application, provided that the reflection layer is disposed in a region on the second side face on the rear side of the first hole. In some embodiments, the distance between the first edge of the reflection layer and the third side face may also be greater than or equal to the shortest distance between the hole wall of the first hole and the third side face, to increase the light on the rear side of the first hole.

For example, with reference to FIG. 18(a), the first hole 4101-1 may be disposed in a middle position on an upper part of the light guide plate 410.

For example, with reference to FIG. 18(b), the first hole 4101-1 may alternatively be disposed in an upper right corner of the light guide plate 410, that is, the first hole 4101-1 is disposed in a position that is of the light guide plate 410 and that is close to the fourth side face 414.

In this structure, optionally, a distance L₇ between the fourth side face 414 and a second edge 430-B that is of the reflection layer 430 and that is close to the fourth side face 414 is less than a shortest distance L₈ between the fourth side face 414 and the hole wall of the first hole 4101-1. The shortest distance between the fourth side face 414 and the hole wall of the first hole 4101 may be understood as a distance between the fourth side face 414 and an edge 4101-1B that is of the hole wall and that is closest to the fourth side face 414. In FIG. 18(b), the edge that is of the hole wall and that is closest to the fourth side face 414 is a right edge of the hole wall. It should be understood that the distance between the second edge 430-B of the reflection layer 430 and the fourth side face 414 indicates a distance between the second edge 430-B and the fourth side face 414 in the second direction (for example, the x direction). The shortest distance between the hole wall of the first hole 4101-1 and the fourth side face 414 indicates a shortest distance between the hole wall of the first hole 4101-1 and the fourth side face 414 in the second direction (for example, the x direction).

It should be understood that, a relationship between the distance between the second edge of the reflection layer shown in FIG. 18(b) and the fourth side face, and the shortest distance between the hole wall of the first hole and the fourth side face is merely an example description, and should not constitute any limitation on this application, provided that the reflection layer is disposed in a region on the second side face on the rear side of the first hole. In some embodiments, the distance between the second edge of the reflection layer and the fourth side face may also be greater than or equal to the shortest distance between the hole wall of the first hole and the fourth side face, to increase the light on the rear side of the first hole.

2. The hole of the light guide plate may be a hole in any shape.

For details, refer to the description of Point 2 in the first design. Details are not described again.

3. A quantity of holes in the light guide plate may be properly designed based on a quantity of components that need to be accommodated.

It may be understood that the plurality of holes including the first hole may be disposed in the light guide plate.

For example, when the quantity of components that need to be accommodated is relatively large, a relatively large quantity of holes may be disposed. Correspondingly, when the quantity of components that need to be accommodated is relatively small, a relatively small quantity of holes may be disposed. It should be understood that when a plurality of holes are disposed in the light guide plate, shapes of the plurality of holes may be the same or different and may be randomly combined. Positions of the holes are also not limited.

It should be noted that when the plurality of holes are disposed in the light guide plate, there may be one or more reflection layers disposed on the second side face of the light guide plate. If one reflection layer is disposed, the reflection layer may be disposed on rear sides of the plurality of holes to compensate for light on the rear sides of the plurality of holes, or the reflection layer may be disposed on rear sides of some of the plurality of holes to compensate for light on the rear sides of the some holes. If a plurality of reflection layers are disposed, the plurality of reflection layers may be used to compensate for light of some or all of the plurality of holes; and one reflection layer may be used to compensate for light on a rear side of one hole, or may be used to compensate for light on rear sides of several consecutive (for example, two or three) holes.

It should be further noted that, when the plurality of holes are disposed in the light guide plate, in principle, a distance between two holes is the larger the better to avoid mutual impacts between optical paths of the two holes. However, in an actual design, the distance between the two holes may be properly designed in terms of beauty and other perspectives.

4. The shape of the hole and the quantity of holes in the light guide plate can be comprehensively considered.

For details, refer to the description of Point 4 in the first design. Details are not described again. For ease of understanding, FIG. 19 shows a structure in which two holes are disposed in a light guide plate. The two holes are denoted as a first hole 4101-1 and a second hole 4101-2. The reflection layer 430 is disposed in a region on the second side face 412 on rear sides of the two holes.

Similar to the analysis of the backlight apparatus in FIG. 12(a) and FIG. 12(b), in comparison with the implementation of disposing one hole that can accommodate two or more components, the light on the rear sides of the holes can be more effectively increased when a plurality of holes are disposed and one hole accommodates one component or a relatively small quantity of components, to improve a lighting effect and brightness on the rear sides of the holes. In addition, the following case is avoided: Extra space is removed from this structure. Therefore, the light guide plate has better strength. It is not easy to form a crack on the light guide plate.

5. The light source component may be disposed on any side face of the light guide plate.

For details, refer to the related description of Point 6 in the first design. Details are not described again.

The foregoing describes the first design and the second design of the backlight apparatus in this application. It may be understood that the first design and the second design may be separately used or used in combination. This is not limited in this application. FIG. 20 and FIG. 21 are other schematic structural diagrams of a backlight apparatus according to this application. With reference to FIG. 20 and FIG. 21, the first design and the second design are combined for the backlight apparatus. The second side face 412 includes a convex region 4121. A reflection layer 430 or a reflection layer 430' is disposed above the convex region 4121. In this way, the backlight apparatus can not only concentrate light from the third side face and the fourth side face to the rear side of the first hole, but also improve the reflectivity of the convex region by using the reflection layer, so that brightness on the rear side of the first hole can be better improved.

It should be understood that a structure of each component in the backlight apparatus and a connection relationship between the components shown in FIG. 9(a) and FIG. 9(b) to FIG. 21 are merely example descriptions, and a structure of any replaceable component that has the same function as each component falls within the protection scope of the embodiments of this application.

It should be understood that in this embodiment of this application, unless otherwise specified and limited, terms such as "connection" and "fixed connection" should be understood in a broad sense. For a person of ordinary skill in the art, specific meanings of the foregoing terms in the embodiments of this application may be understood based on a specific situation.

For example, for the "connection", various connection manners such as a fixed connection, a rotary connection, a flexible connection, a mobile connection, and integrally forming may be used. The connection may be a direct connection, or may be an indirect connection implemented by using an intermediate medium, or may be a connection inside two components or an interaction relationship between the two components.

For example, for the "fixed connection", one element may be directly or indirectly fixed to another element. The fixed connection may include a mechanical connection, welding, bonding, and the like. The mechanical connection may include riveting, a bolt connection, a threaded connection, a key pin connection, a buckle connection, a latching connection, insertion, and the like. The bonding may include bonding by using an adhesive, bonding by using a solvent, and the like.

It should also be understood that "parallel" or "perpendicular" described in this application may be understood as "approximately parallel" or "approximately perpendicular".

In addition, directions or positional relationships indicated by terms "length", "width", "thickness", "up", "down", "front", "rear", and the like are directions or positional relationships that are shown based on the accompanying drawings, and are merely used to describe this application easily and simplify the description, rather than indicate or imply that an indicated apparatus or component needs to have a specific orientation or needs to be constructed and operated in the specific orientation, and therefore cannot be understood as a limitation on this application.

It should be noted that the terms "first", "second", "third", "fourth", and the like are merely used for description, and cannot be understood as indicating or implying relative importance or implicitly indicating a quantity of indicated technical features. The features defined as "first", "second", "third", and "fourth" may explicitly or implicitly include one or more of features.

In the embodiments of this application, "a plurality of' means two or more.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A backlight apparatus, comprising a light guide plate and a light source component that provides a light source for the light guide plate, wherein
the light guide plate comprises a first side face and a second side face that are disposed opposite to each other, and the light source component is disposed close to the first side face; and
a first hole is disposed on the light guide plate, the second side face comprises a convex region, the convex region comprises one or more protrusions, and the convex region is located on a rear side that is of the first hole and that is away from the first side face.

2. The backlight apparatus according to claim 1, wherein the first hole is disposed away from the first side face.

3. The backlight apparatus according to claim 1 or 2, wherein the light guide plate further comprises a third side face and a fourth side face that are disposed opposite to each other, and both the third side face and the fourth side face are connected to the first side face and the second side face; and
the first hole is disposed close to the third side face, and a distance between the third side face and a first edge that is of the convex region and that is close to the third side face is less than a shortest distance between a hole wall of the first hole and the third side face; or
the first hole is disposed close to the fourth side face, and a distance between the fourth side face and a second edge that is of the convex region and that is close to the fourth side face is less than a shortest distance between a hole wall of the first hole and the fourth side face.

4. The backlight apparatus according to any one of claims 1 to 3, wherein a shape of the protrusion is an arc.

5. The backlight apparatus according to any one of claims 1 to 3, wherein a cross section of the protrusion on a first plane comprises two connected edges, an included angle β between the two edges meets the following condition: 90°<β<150°, and the first plane is parallel to the light guide plate.

6. The backlight apparatus according to any one of claims 1 to 5, wherein a second hole is further disposed on the light guide plate, and the convex region is also located on a rear side that is of the second hole and that is away from the first side face.

7. The backlight apparatus according to any one of claims 1 to 6, wherein a reflection layer is disposed on the convex region, and a reflectivity of the reflection layer is greater than a preset value.

8. The backlight apparatus according to any one of claims 1 to 7, wherein a shape of the first hole is a raceway shape, a circle, a rectangle, an oval, or the like.

9. A display apparatus, wherein the display apparatus comprises a display panel and the backlight apparatus according to any one of claims 1 to 8, and the display panel is disposed on an out-light side of the backlight apparatus.

10. An electronic device, wherein the electronic device comprises a display apparatus, at least one component, and a main body for accommodating the display apparatus; and the display apparatus comprises a display panel and the backlight apparatus according to any one of claims 1 to 8, the display panel is disposed on an out-light side of the backlight apparatus, and the at least one component is accommodated in a first hole of the backlight apparatus.

11. The electronic device according to claim 10, wherein the component is a camera.
